# EUROPEAN PATENT APPLICATION

(11) **EP 2 975 776 A1**
(43) Date of publication of application: **20.01.2016**
(21) Application number: 13878228.9
(22) Date of filing: 11.03.2013
(51) Int. Cl.: H04B 1/74, H04L 12/28, H04L 12/40

(54) **TRAIN INFORMATION MANAGEMENT DEVICE**

(71) Applicant: Mitsubishi Electric Corporation, Tokyo 100-8310 (JP)
(72) Inventor: TATSUMI, Shogo, Tokyo 100-8310 (JP); ASAI, Yosuke, Tokyo 100-8310 (JP); HONDA, Shingo, Tokyo 100-8310 (JP); ISHIMARU, Yusuke, Tokyo 100-8310 (JP); IDO, Joji, Tokyo 100-8310 (JP)
(74) Representative: Witte, Weller & Partner Patentanwälte mbB
(86) International application number: PCT/JP2013/056633
(87) International publication number: WO 2014/141361

(57) **Abstract**

A second-system terminal device 21-2 installed in one vehicle is connected to a first-system backbone transmission line 1 and a second-system backbone transmission line 2, and when having received a status information packet B from a second-system terminal device 31-2 installed in another vehicle from the first-system backbone transmission line 1 or the second-system backbone transmission line 2, the second-system terminal device 21-2 installed in the one vehicle transfers a control packet A to the second-system terminal device 31-2 adjacent to a side farther from a central device than the second-system terminal device 21-2 that has received the status information packet B, by using the backbone transmission line from which the status information packet B has been received.

## Description

### Field

The present invention relates to a train-information management device.

### Background

Trains in recent years are installed with a train-information management device that monitors operating states of devices installed in a train (hereinafter, "device(s)") such as a brake and an air conditioner, and controls operations of each device individually. The train-information management device includes a central device and terminal devices, in which a control packet for controlling the devices generated by the central device is relayed by the terminal devices and is transmitted to each of the devices, to thereby realize efficient operations of the train. Therefore, it is an important issue from the viewpoint of realizing comfortable and efficient operations of the train to increase reliability of a transmission system including the train-information management device.

In a conventional technique listed in Patent Literature 1 mentioned below, a terminal device installed, for example, in a second car detects that information from one of backbone transmission lines has been stopped and transfers data by broadcast from the other backbone transmission line to the one backbone transmission line, and a terminal device provided in a third car receives the data and transfers the data by broadcast to the other backbone transmission line. In this manner, in the conventional technique, the terminal devices transfer data at the occurrence of an abnormality in the backbone transmission line, thereby ensuring high reliability.

### Citation List

### Patent Literature

Patent Literature 1: Japanese Patent Application Laid-open No. 2004-172943

### Summary

### Technical Problem

However, in the conventional technique described in Patent Literature 1 listed above, when an abnormality has occurred in the backbone transmission line, data is transferred by broadcast. Therefore, there is a problem in that a network load increases, and thus causing a decrease in transmission quality.

The present invention has been achieved in view of the above problems, and an object of the present invention is to provide a train-information management device that can transmit a control packet without increasing traffic in duplexed backbone transmission lines.

### Solution to Problem

In order to solve the aforementioned problems, a train-information management device according to one aspect of the present invention is constructed to include a central device that is connected to a first backbone transmission line provided throughout a plurality of vehicles constituting a train formation and a second backbone transmission line provided throughout all the vehicles to form a redundant system of the first backbone transmission line, so as to manage information transmitted in the train, and a plurality of terminal devices that are connected to the first backbone transmission line and the second backbone transmission line to collect status information from devices installed in each of the vehicles, wherein the central device outputs control information of the devices to the first backbone transmission line and the second backbone transmission line, each of the terminal devices outputs the status information to the first backbone transmission line and the second backbone transmission line, and when a terminal device installed in one vehicle receives the status information output from a terminal device installed in another vehicle only from one of the backbone transmission lines, the terminal device installed in the one vehicle detects an abnormality in the backbone transmission line between the terminal device installed in the one vehicle and the terminal device installed in the another vehicle, and transfers the control information by unicast to a terminal device on a side opposite to the central device by using the one backbone transmission line.

### Advantageous Effects of Invention

According to the present invention, a terminal device transfers a control packet sent from a central device by unicast. Accordingly, the control packet can be transmitted without increasing traffic in duplexed backbone transmission lines.

### Brief Description of Drawings

FIG. 1 is a schematic diagram illustrating a train-information management device according to an embodiment of the present invention.
FIG. 2 is a configuration diagram of a transmission control unit.
FIG. 3 is an explanatory diagram of operations of the train-information management device when a backbone transmission line is normal.
FIG. 4 is an explanatory diagram of operations of the train-information management device when an abnormality has occurred in the backbone transmission line.

### Description of Embodiments

Exemplary embodiments of a train-information management device according to the present invention will be described below in detail with reference to the accompanying drawings. The present invention is not limited to the embodiments.

### Embodiment.

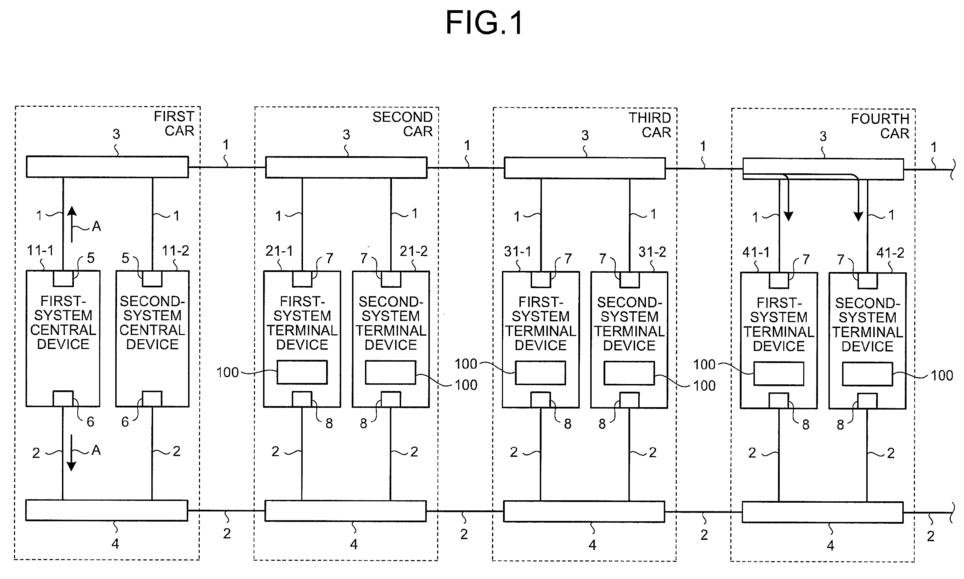

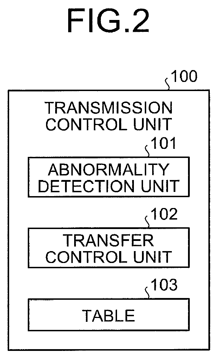

FIG. 1 is a schematic diagram illustrating a train-information management device according to an embodiment of the present invention. FIG. 2 is a configuration diagram of a transmission control unit 100. In FIG. 1, a first-system backbone transmission line 1 as a primary backbone transmission line and a second-system backbone transmission line 2 as a secondary backbone transmission line are provided. The first-system backbone transmission line 1 and the second-system backbone transmission line 2 constitute a backbone network, and is a LAN (Local Area Network) backbone using, for example, the Ethernet^{®}. The number of vehicles is not limited to the example illustrated in FIG. 1.

A lead vehicle (for example, a first car) is installed with a first-system central device 11-1 as a primary central device constituting the train-information management device, and a second-system central device 11-2 as a secondary central device constituting the train-information management device. It is assumed that devices equivalent to the first-system central device 11-1 and the second-system central device 11-2 are provided also in a lead vehicle at the other end of the train.

The first-system central device 11-1 and the second-system central device 11-2 are respectively connected to the first-system backbone transmission line 1 and the second-system backbone transmission line 2 via a hub 3 or a hub 4. The first-system central device 11-1 and the second-system central device 11-2 monitor soundness of each other, and for example, when the first-system central device 11-1 has a failure, the second-system central device 11-2 having detected the failure of the first-system central device 11-1 performs the same operation as that of the first-system central device 11-1.

The central device 11 (11-1, 11-2) has a function of collecting pieces of information regarding the condition of devices so as to collectively manage the pieces of information, and informing a crewman of the condition of devices. As the information managed by the central device 11, for example, there can be mentioned a BC pressure of a brake system, speed information, and a door opening command, which are detected and collected in each vehicle. If these pieces of information to be collectively managed in the entire formation are individually managed by each terminal device, operations in each of the vehicles may not be uniformly performed. Therefore, these pieces of vehicle information to be collectively managed in the entire formation are managed by each central device 11.

Furthermore, the central device 11 generates a control packet A by adding, for example, an IP address of each of the terminal devices as destination information to the control information for controlling the devices. The control packet A is generated at a predetermined period, and is sent to the first-system backbone transmission line 1 and the second-system backbone transmission line 2.

Vehicles other than the lead vehicles are each installed with a primary terminal device (a first-system terminal device) constituting the train-information management device, and a standby terminal device (a second-system terminal device) constituting the train-information management device. The second-system terminal device is configured similarly to the first-system terminal device, and when the first-system terminal device has a failure, the second-system terminal device performs the same operation as that of the first-system terminal device. A first-system terminal device 21-1 and a second-system terminal device 21-2 are installed in a second car, a first-system terminal device 31-1 and a second-system terminal device 31-2 are installed in a third car, and a first-system terminal device 41-1 and a second-system terminal device 41-2 are installed in a fourth car. These terminal devices are respectively connected to the first-system backbone transmission line 1 and the second-system backbone transmission line 2 via the hub 3 or 4.

The terminal devices collect pieces of status information from the devices, thereby generating a status information packet B in response to the control packet A. The status information packet B includes a header indicating a destination of the status information packet B (the central device 11), a device ID uniquely expressing a source device of the status information, and status information of the device (the current temperature in the case of an air conditioner). The status information packet B is generated at a predetermined period, and is sent to the first-system backbone transmission line 1 and the second-system backbone transmission line 2.

In each of the central devices 11, an individual IP address is set to each connection port (5, 6) of the first-system backbone transmission line 1 and the second-system backbone transmission line 2. Similarly, In each of the terminal devices 11a, an individual IP address is set to each connection port (7, 8) of the first-system backbone transmission line 1 and the second-system backbone transmission line 2. The transmission control unit 100 in each of the respective terminal devices includes an abnormality detection unit 101, a transfer control unit 102, and a table 103.

The function of the abnormality detection unit 101 is described here. For example, if an abnormality has occurred in the second-system backbone transmission line 2 between the second car and the third car, the status information packet B output from the first-system terminal device 31-1 in the third car to the first-system backbone transmission line 1 and the second-system backbone transmission line 2 is not transmitted to the second-system backbone transmission line 2 between the second car and the third car. Therefore, when having received the status information packet B only from the connection port 7 to which the first-system backbone transmission line 1 is connected, for example in a transmission period of the status information packet B (for example, in a period during which the status information packet B is generated), the abnormality detection unit 101 in the second-system terminal device 21-2 detects that an abnormality has occurred in the second-system backbone transmission line 2 on the side opposite to the central device of the terminal device (for example, the second-system terminal device 21-2) that has received the status information packet B.

In the table 103, for example, the IP address of each of the connection ports and transfer destinations of the control packet A are recorded in association with each other. The transfer destination of the control packet A set in the table 103 is, for example, a terminal device (for example, the second-system terminal device 31-2) adjacent to the terminal device on the side opposite to the central device (for example, the second-system terminal device 21-2) that has received the status information packet B.

Although the transfer destination of the control packet A is not limited to the first-system terminal device, a processing load of the second-system terminal device is smaller than that of the first-system terminal device. Therefore, by setting the transfer destination of the control packet A to the second-system terminal device, the resources can be effectively utilized, and the processing load of the first-system terminal device can be reduced, thereby enabling to ensure stable transmission quality.

The function of the transfer control unit 102 is described. If an abnormality in the backbone transmission line is detected by the abnormality detection unit 101, the transfer control unit 102 refers to the table 103 so as to determine the transfer destination of the control packet A transmitted from the central device 11, sets a unicast address corresponding to the transfer destination to the control packet A, and transfers the control packet A to the backbone transmission line on the side opposite to the backbone transmission line in which an abnormality has been detected.

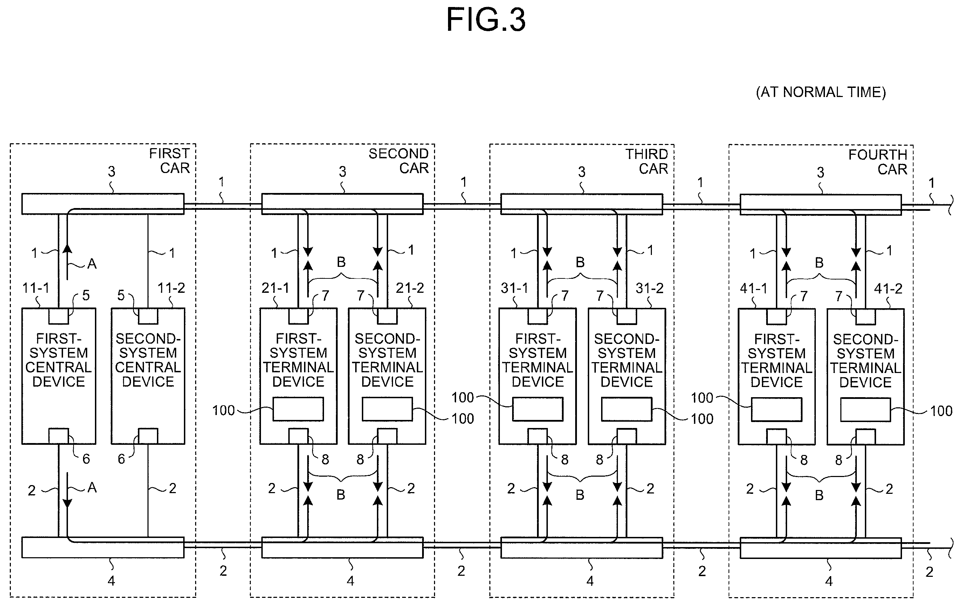

Operations of the present embodiment are described next. FIG. 3 is an illustration for explaining the operations of the train-information management device when a backbone transmission line is normal. The central devices installed in each lead vehicle of the train transmit control packets, and either one of the control packets is defined as "effective control packet". A definition method is such that, for example, "when an operation key (Key) is inserted into a primary controller (not illustrated) in a cab of the lead vehicle, a control packet transmitted by the central device of the vehicle is designated to be an effective control packet", or "when an operation key is not inserted into the primary controller in the cab of any one of lead vehicles, a control packet transmitted by the central device of the first car is designated to be an effective control packet". In this manner, the method of defining the control packet as an "effective control packet" is composed of some conditions, and although detailed descriptions thereof will be omitted, each of the terminal devices detects the "effective control packet" according to the definition method. In the following descriptions, it is assumed that a control packet transmitted by the first car illustrated in FIG. 3 is the "effective control packet".

The control packet A generated by the first-system central device 11-1 is output to the first-system backbone transmission line 1 and the second-system backbone transmission line 2. The packet is a broadcast packet, and all the terminal devices (and other central devices) connected to the first-system backbone transmission line 1 and the second-system backbone transmission line 2 can receive the packet.

When there is no abnormality in any of the first-system backbone transmission line 1, the second-system backbone transmission line 2, the hub 3, and the hub 4, each of the terminal devices receives the control packet A from the first-system central device 11-1, and the received control packet A is relayed to devices (not illustrated) connected to the terminal device, and each of the devices operates according to the control information included in the control packet A.

Meanwhile, each of the terminal devices collects pieces of status information from the devices, and thereby generates the status information packet B in such a manner as to respond to the control packet A. The status information packet B includes status information of all the connected devices, connection state of each of the devices (whether there is any disconnection), and status information of the terminal device itself. The generated status information packet B is sent to the first-system backbone transmission line 1 and the second-system backbone transmission line 2. The packet is a broadcast packet and all the central devices (and other terminal devices) connected to the first-system backbone transmission line 1 and the second-system backbone transmission line 2 can receive the packet.

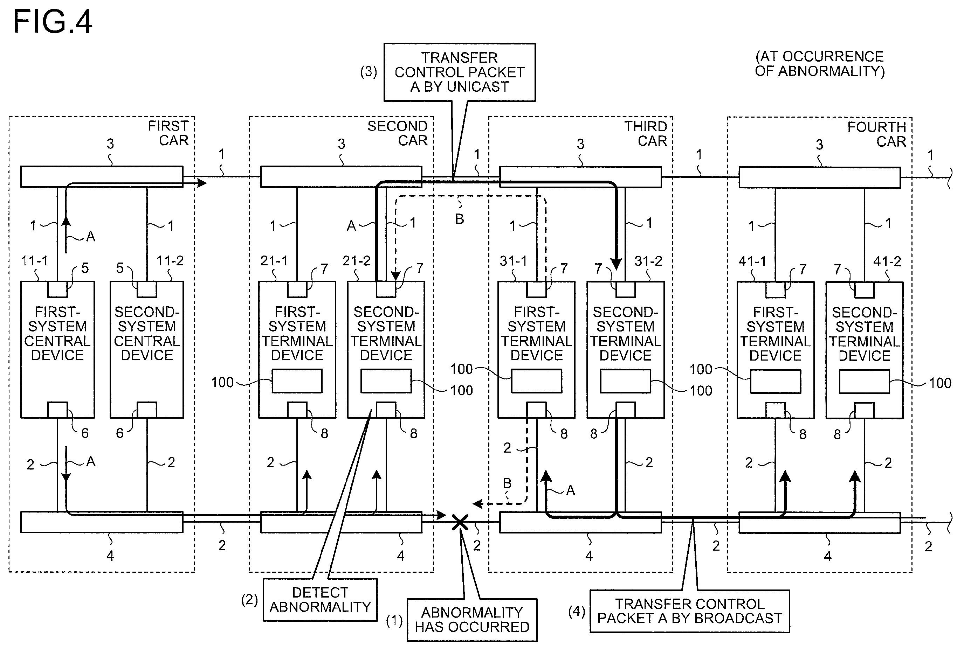

FIG. 4 is an illustration for explaining the operations of the train-information management device when an abnormality has occurred in one of the backbone transmission lines. In FIG. 4, a state where an abnormality has occurred in the second-system backbone transmission line 2, for example, between the second car and the third car is illustrated in order to describe an example of the abnormality having occurred in a transmission system. In the present embodiment, for the convenience of explanation, an example in which an abnormality has occurred in the backbone transmission line is described. However, the transfer operation of the transmission control unit 100 can be applied to a case where an abnormality has occurred in the transmission system other than the backbone transmission line (for example, in the hub 3 or 4).
(1) When an abnormality has occurred as illustrated in FIG. 4, the status information packet B output, for example, from the first-system terminal device 31-1 in the third car to the first-system backbone transmission line 1 is normally received by the second-system terminal device 21-2 in the second car. However, the status information packet B output from the first-system terminal device 31-1 in the third car to the second -system backbone transmission line 2 is not normally received by the second-system terminal device 21-2.
(2) When having received the status information packet B from the first-system terminal device 31-1 only at the connection port of the first-system backbone transmission line, the second-system terminal device 21-2 detects that an abnormality has occurred in the second-system backbone transmission line 2 between the second car and the third car.
(3) The second-system terminal device 21-2 having detected the abnormality determines the second-system terminal device 31-2 adjacent to the terminal device on the side opposite to the central device (the second-system terminal device 21-2) that has received the status information packet B as a transfer destination of the control packet A. The second-system terminal device 21-2 then transfers the control packet A, which has been output from the first-system central device 11-1 to the second-system backbone transmission line 2, by unicast to the first-system terminal device 31-1 by using the first-system backbone transmission line 1.

That is, when the terminal device installed in one vehicle (the second-system terminal device 21-2 illustrated in FIG. 4) receives the status information B from a terminal device (the first-system terminal device 31-1) installed in another vehicle only from one of the backbone transmission lines (the first-system backbone transmission line 1), the terminal device installed in the one vehicle detects an abnormality in the other backbone transmission line (the second-system backbone transmission line 2 between the second car and the third car) between the terminal device installed in the one vehicle and the terminal device installed in the other vehicle, and transfers the control information A by unicast to the terminal device installed in the other vehicle by using the backbone transmission line on the side opposite to the backbone transmission line in which an abnormality has been detected.

The conventional technique described in the Patent Literature mentioned above is configured such that a terminal device having detected an abnormality in the backbone transmission line transfers the control packet from the central device by broadcast. According to the conventional technique, for example, the second-system terminal device 21-2 illustrated in FIG. 4 transfers the control packet A by broadcast to the first-system backbone transmission line 1. In this case, the control packet A is transmitted not only to the first-system backbone transmission line 1 between the second car and the third car, but also to the first-system backbone transmission line 1 in the third car and thereafter. Therefore, the network load of the first-system backbone transmission line 1 increases. According to the train-information management device of the present embodiment, for example, the second-system terminal device 21-2 transfers the control packet A by unicast to the first-system backbone transmission line 1. Accordingly, an increase in the network load as in the conventional technique does not occur.
(4) If the control packet A is not received at the connection port 8 even after an elapse of time of integral multiple (for example, twice the time of the transmission period of the control packet A) of a transmission period of the control packet A (for example, the period during which the control packet A is generated), the second-system terminal device 31-2 in the third car transfers the control packet A from the first-system backbone transmission line 1 by broadcast to the backbone transmission line (in FIG. 4, the second-system backbone transmission line 2) on the opposite side. Accordingly, the control packet A is transmitted to the first-system terminal device 31-1, the first-system terminal device 41-1, and the second-system terminal device 41-2.

If an abnormality has occurred also in the first-system backbone transmission line 1, for example, between the third car and the fourth car to cause a double failure, although the control packet A is transmitted from the second-system terminal device 21-2 to the second-system terminal device 31-2, the terminal devices in the fourth car and other cars following thereafter cannot receive the control packet A. According to the train-information management device of the present embodiment, even if a double failure has occurred, the second-system terminal device 31-2 in the third car transfers the control packet A by broadcast by using the second-system backbone transmission line 2. Accordingly, the terminal devices in the fourth car and other cars following thereafter can receive the control packet A.

In order to prevent all the terminal devices from performing the transfer operation described in the section (4) simultaneously, a transfer waiting time corresponding to a distance between the central device (in FIG. 4, the first-system central device 11-1 in the first car) as a source of the control packet A and a vehicle that receives the control packet A is set in the transfer control unit 102 of the respective terminal devices. For example, time two as long as the transmission period of the control packet A is set as the transfer waiting time in the second-system terminal device 21-2 in the second car, time three times as long as the transmission period is set as the transfer waiting time in the second-system terminal device 31-2 in the third car, and time four times as long as the transmission period is set as the transfer waiting time in the second-system terminal device 41-2 in the fourth car. For example, the second-system terminal device 41-2 in the fourth car performs the transfer operation only when the control packet A is received after the transfer waiting time set in the second-system terminal device 41-2 has passed. That is, when the control packet A is received before the transfer waiting time has passed, the second-system terminal device 41-2 interrupts the transfer operation.

In the present embodiment, the operation when the control packet A is transferred to a terminal device (for example, the second-system terminal device 31-2) adjacent to a terminal device on the side opposite to the central device (for example, the second-system terminal device 21-2) that has received the status information packet B has been described. However, the transfer destination of the control packet A is not limited to the adjacent terminal device. For example, in FIG. 4, when the first-system terminal device 31-1 in the third car has a failure, the status information packet B from the first-system terminal device 31-1 is not transferred to the second-system terminal device 21-2. However, the status information packet B output, for example, from the second-system terminal device 41-2 in the fourth car is received by the second-system terminal device 21-2. In such a case, the second-system terminal device 21-2 specifies the transfer destination of the control packet A based on the source information included in the status information packet B, and transfers the control packet A to the second-system terminal device 41-2 by unicast.

As described above, the train-information management device according to the present embodiment includes a central device that is connected to a first backbone transmission line (the first-system backbone transmission line 1) provided throughout a plurality of vehicles constituting a train formation and a second backbone transmission line (the second-system backbone transmission line 2) provided throughout all the vehicles to form a redundant system of the first backbone transmission line, so as to manage information transmitted in the train, and a plurality of terminal devices that are connected to the first backbone transmission line and the second backbone transmission line to collect status information (the status information packet B) from devices installed in the respective vehicles. It is configured that the central device outputs control information (the control packet A) of the devices to the first backbone transmission line and the second backbone transmission line, the terminal devices each outputs the status information to the first backbone transmission line and the second backbone transmission line, and when a terminal device (for example, either the first-system terminal device 21-1 or the second-system terminal device 21-2) installed in one vehicle receives the status information output from a terminal device (for example, either the first-system terminal device 31-1 or the first-system terminal device 31-1) installed in another vehicle only from one of the backbone transmission lines (for example, the first-system backbone transmission line 1), the terminal device installed in the one vehicle detects an abnormality in the backbone transmission line (for example, the second-system backbone transmission line 2 between the second car and the third car) between the terminal device installed in the one vehicle and the terminal device installed in the another vehicle, and transfers the control information by unicast to the terminal device on the side opposite to the central device by using the one backbone transmission line (the first-system backbone transmission line 1). Due to this configuration, even if an abnormality has occurred in the second-system backbone transmission line 2 between the second car and the third car, the control packet A is transferred to at least the terminal device in the third car. As a result, the devices can be controlled while an increase in the traffic in the backbone transmission line or the like is being suppressed.

Each of the terminal devices is divided into a first terminal device and a second terminal device forming a redundant system of the first terminal device. The first terminal device (for example, the first-system terminal device 21-1) installed in the one vehicle is configured not to transfer the control information, and the second terminal device (for example, the second-system terminal device 21-2) installed in the one vehicle is configured to transfer the control information by unicast to any one of the first terminal device (for example, the first-system terminal device 31-1) or the second terminal device (for example, the second-system terminal device 31-2) which are on the side opposite to the central device. Due to this configuration, the processing load of the first-system terminal device (for example, the second-system terminal device 21-2) can be reduced, thereby enabling to ensure stable transmission quality.

It is configured that, when having received the control information transferred by unicast, the second terminal device (for example, the second-system terminal device 31-2) installed in the another vehicle transfers the control information by broadcast to terminal devices (for example, the first-system terminal device 41-1, the second-system terminal device 41-2, and the like) other than the second terminal device installed in the another vehicle, by using the backbone transmission line on the side opposite to the backbone transmission line (for example, the first-system backbone transmission line 1) that has received the control information. Due to this configuration, the processing load of the first-system terminal device can be reduced, thereby enabling to ensure stable transmission quality.

It is configured that the transfer waiting time that becomes long in proportion to the distance between the central device and a vehicle installed with the respective terminal devices is set in the respective terminal devices, and the terminal device (for example, either the first-system terminal device 31-1 or the second-system terminal device 31-2) installed in the another vehicle transfers the control information transferred by unicast to other terminal devices (for example, the first-system terminal device 41-1 and the like) by broadcast by using the backbone transmission line on the side opposite to the backbone transmission line that has received the control information, only when the control information is received after the transfer waiting time has passed. Due to this configuration, the plurality of terminal devices do not transfer the control packet A by broadcast simultaneously, thereby enabling to suppress an increase in a load of the backbone transmission lines.

The train-information management device according to the present embodiment is only an example of the contents of the present invention, and it is possible to combine the invention with other well-known techniques, and it is needless to mention that the present invention can be configured while modifying it without departing from the scope of the invention, such as omitting a part of its configuration.

### Industrial Applicability

As described above, the present invention is applicable to a train-information management device that is applied to a train having duplexed backbone transmission lines, and is particularly useful as an invention that can transmit a control packet without increasing traffic in the backbone transmission lines.

### Reference Signs List

1 first-system backbone transmission line, 2 second-system backbone transmission line, 3, 4 hub, 5, 6, 7, 8 connection port, 11-1 first-system central device, 11-2 second-system central device, 21-1, 31-1, 41-1 first-system terminal device, 21-2, 31-2, 41-2 second-system terminal device, 100 transmission control unit, 101 abnormality detection unit, 102 transfer control unit, 103 table, A control packet, B status information packet.

## Claims

1. A train-information management device comprising a central device that is connected to a first backbone transmission line provided throughout a plurality of vehicles constituting a train formation and a second backbone transmission line provided throughout all the vehicles to form a redundant system of the first backbone transmission line, so as to manage information transmitted in the train, and a plurality of terminal devices that are connected to the first backbone transmission line and the second backbone transmission line to collect status information from devices installed in each of the vehicles, wherein
the central device outputs control information of the devices to the first backbone transmission line and the second backbone transmission line,
each of the terminal devices outputs the status information to the first backbone transmission line and the second backbone transmission line, and
when a terminal device installed in one vehicle receives the status information output from a terminal device installed in another vehicle only from one of the backbone transmission lines, the terminal device installed in the one vehicle detects an abnormality in the backbone transmission line between the terminal device installed in the one vehicle and the terminal device installed in the another vehicle, and transfers the control information by unicast to a terminal device on a side opposite to the central device by using the one backbone transmission line.

2. The train-information management device according to claim 1, wherein
each of the terminal devices is divided into a first terminal device and a second terminal device forming a redundant system of the first terminal device,
the first terminal device installed in the one vehicle does not transfer the control information, and
the second terminal device installed in the one vehicle transfers the control information by unicast to any of the first terminal device or the second terminal device on the side opposite to the central device.

3. The train-information management device according to claim 2, wherein, when having received the control information transferred by unicast, the second terminal device installed in the another vehicle transfers the control information by broadcast to terminal devices other than the second terminal device installed in the another vehicle, by using a backbone transmission line on a side opposite to a backbone transmission line that has received the control information.

4. The train-information management device according to any one of claims 1 to 3, wherein
a transfer waiting time that becomes long in proportion to a distance between the central device and a vehicle installed with each of the terminal devices is set in each of the terminal devices, and
the terminal device installed in the another vehicle transfers the control information transferred by unicast to other terminal devices by broadcast by using the backbone transmission line on the side opposite to the backbone transmission line that has received the control information, only when the control information is received after the transfer waiting time has passed.
